# EUROPÄISCHE PATENTANMELDUNG

(11) **EP 2 626 681 A1**
(43) Veröffentlichungstag der Anmeldung: **14.08.2013**
(21) Anmeldenummer: 13154409.0
(22) Anmeldetag: 07.02.2013
(51) Int. Cl.: G01L 19/06, G01F 1/00

(54) **Messvorrichtung mit einem Drucksensor**

(30) Priorität: 10.02.2012 DE 102012202038
(71) Anmelder: Rolls-Royce Deutschland Ltd & Co KG, 15827 Blankenfelde-Mahlow (DE)
(72) Erfinder: Lück, Rudolf, 14558 Nuthetal-Rehbrücke (DE); Hackenberg, Peter, 14469 Potsdam (DE)
(74) Vertreter: Gross, Felix

(57) **Zusammenfassung**

Die Erfindung betrifft eine Messvorrichtung mit einem Drucksensor, wobei der Drucksensor eine Messzelle (1) aufweist, die dazu ausgebildet ist, einen Druck zu erfassen. Es ist vorgesehen, dass die Messzelle (1) des Drucksensors in einer oder angrenzend an eine Schutzzelle (2, 2') angeordnet ist, die mit einem Messfluid (7) gefüllt ist, das über mindestens eine Trennmembran (3, 31, 32) mit einem zu messenden Fluid (8) koppelbar ist. Des Weiteren ist vorgesehen, dass in der Schutzzelle (2, 2') zwischen der Trennmembran (3, 31, 32) und der Messzelle (1) eine Dämpfungseinrichtung angeordnet ist, die eine Verengungsstruktur (4) und ein dahinter angeordnetes Volumenerweiterungsmittel (5) umfasst, das bei einer Druckerhöhung im Messfluid (7) ein vergrößertes Volumen zwischen der Verengungsstruktur (1) und der Messzelle (1) bereitstellt.

## Beschreibung

Die Erfindung betrifft eine Messvorrichtung mit einem Drucksensor gemäß dem Oberbegriff des Anspruchs 1 und eine Filteranordnung zur Filterung eines Fluides mit einer solchen Messvorrichtung. Die Messvorrichtung stellt einen Schutz eines Drucksensors vor Druck- und Stoßwellen bereit.

Der Öl- und Brennstoffzufluss, z. B. in Flugzeugtriebwerken, wird durch Filteranordnungen von Verunreinigungen befreit. Um den Durchfluss durch die Filteranordnung zu prüfen und Verstopfungen rechtzeitig zu erkennen, befindet sich parallel zu der Filteranordnung in einer zwischen dem Ein- und dem Auslass der Filteranordnung geschalteten Messleitung ein Differentialdrucksensor, z. B. ein auf einem integrierten Chip (IC) basierender Drucksensor. Dieser besteht aus einer Halbleitermembran, auf der Dehnungsmessstreifen (DMS) eindiffundiert bzw. eingeätzt sind. Bei einem Druckunterschied werden die DMS gedehnt oder gestaucht, und es kommt zu einer Änderung des elektrischen Widerstandes. Damit können der Durchfluss von Öl und Brennstoff überprüft und Verstopfungen rechtzeitig erkannt werden.

Es besteht aber die Gefahr, dass derartig ausgebildete Drucksensoren durch einen permanent oszillierenden Druckverlauf beschädigt werden. Um die Differentialdrucksensoren vor derartigen Ereignissen zu schützen, sind verschiedene Vorrichtungen bekannt.

Die US 5 157 973 A beschreibt einen Drucksensor mit integriertem Überdruckschutz. Der aus einer Silikonmembran bestehende Drucksensor ist von zwei Gehäusehälften umschlossen, die jeweils durch ein Leitungsrohr das Messen von Druck oder Druckdifferenzen zulassen. Die Silikonmembran besteht aus einem zentralen Teil, das sich axial wie ein Kolben bewegen kann, sowie aus einem Aussenteil und einem dünnen, flexiblen Stab, der Aussen- und Innenteil miteinander verbindet. Am Innenteil der Gehäusehälften befindet sich jeweils eine dünne Schutzschicht, die bei Überdruck gegen das zentrale Teil der Silikonmembran drückt und somit eine axiale Bewegung unterbindet. Die Schicht wirkt gleichzeitig als Kondensator zum Messen des elektrischen Widerstandes, womit sich auf die Größe des wirkenden Druckes schließen lässt.

Die WO 96/03629 A1 beschreibt eine Schutzmembran für einen Siliziumdrucksensor, die in ihrem äußeren Umfang eine Sicke enthält, welche die Temperatur- und Druckspannungen auffängt und zudem die Trägheit der Schutzmembran beeinflusst.

Die US 2005/0081638 A1 beschreibt ein Sensor-Diaphragma für einen Differentialdruck-Sensor mit einem Überdruckschutz. Der Differentialdruck-Sensor besteht hierbei aus einem zweigeteilten Gehäuse. Zwischen dessen beiden Teilen befindet sich eine Membran in Form eines Mehrschichtverbundes, die den Zwischenraum in zwei Hälften teilt und sich je nach Druckunterschied in die Richtung des geringeren Druckes krümmt. Das innere Gehäuse ist dabei so ausgelegt, dass es bei einem zu hohen Druck keine weitere Krümmung der Membran zulässt.

Aus der US 4 686 764 A ist ein durch eine Membrane geschützter Halbleiter-Drucksensor vorbekannt, der den Druck über eine Kombination aus einem Druckübertragungsmedium und einer dünnen Schutzmembran misst. Die Schutzmembran soll den Sensor dabei vor Lufteinschüssen und ungewöhnlichen Schwankungen des Druckes schützen.

Aus der US 4 879 627 A ist ein kapazitiver Differentialdrucksensor mit Überdruckschutz bekannt, der aus zwei kapazitiven Sensoren besteht, die nebeneinander angeordnet sind und einen Zwischenraum bilden. Bei Druckänderungen biegen sich die Sensormembranen, und die Kapazität ändert sich. Bereits die doppelte Ausführung bietet Schutz gegenüber Überdruck, zudem werden die Membranen jeweils noch durch einen Stopp oder eine Lagerung gesichert.

Die DE 10 2010 022 642 A1 beschreibt eine Vorrichtung zur Überprüfung des Durchflusses von Öl oder Brennstoff durch eine Filteranordnung, bei der ein Differentialdrucksensor zwischen zwei Arme einer Messleitung geschaltet und parallel zum Differentialdrucksensor eine Verbindungsleitung mit einer Schutzmembran angeordnet ist. Über die Schutzmembran wird ein differentieller Überdruck vor dem eigentlich messenden Differentialdrucksensor ausgeglichen und herausgefiltert.

Es besteht ein Bedarf an weiteren Lösungen, die einen Schutz sensibler Drucksensoren (einschließlich Differentialdrucksensoren) vor periodischen Druck- und Stoßwellen bereitstellen, die zu einer stark reduzierten Lebenszeit führen können. Ein solcher Schutz ist insbesondere bei Drucksensoren mit sensiblen Mikrostrukturelementen und bei Anwendungen von Bedeutung, bei denen es zu starken Vibrationen und Resonanzen kommen kann. Beispielsweise kann es in Getrieben, insbesondere in Flugtriebwerken, zu starken Vibrationen kommen, die stark oszillierende Wellen mit hohen Amplituden auslösen können. Auch Pumpen, die Flüssigkeiten transportieren, können starke Druckwellen auslösen. Des Weiteren können sich Resonanzen in unterschiedlichen Teilen einer Leitung aufbauen. Die Folge solcher Vibrationen und Resonanzen ist, dass die messende Membran der Messzelle eines Drucksensors starken, periodischen Druckpulsationen ausgesetzt sein kann, was zu Schädigungen bis hin zur Zerstörung der Messzelle führen kann.

Der Erfindung liegt somit die Aufgabe zugrunde, eine Messvorrichtung mit einem Drucksensor bereitzustellen, die den Drucksensor vor auftretenden Druck- und Stoßwellen schützt.

Zur Lösung dieser Aufgabe sieht die Erfindung vor, eine mit einem Messfluid gefüllte Schutzzelle vorzusehen, in der oder angrenzend an die die Messzelle des Drucksensors angeordnet ist. Das Messfluid der Schutzzelle ist über mindestens eine Trennmembran mit einem zu messenden Fluid koppelbar. Die Trennmembran stellt insofern eine Begrenzung der Schutzzelle dar. Des Weiteren ist erfindungsgemäß in der Schutzzelle zwischen der Trennmembran und der Messzelle eine Dämpfungseinrichtung angeordnet. Diese umfasst eine Verengungsstruktur, die für das Messfluid einen lokalen Strömungswiderstand darstellt, und ein dahinter angeordnetes Volumenerweiterungsmittel, das bei einer Druckerhöhung im Messfluid ein vergrößertes Volumen zwischen der Verengungsstruktur und der Messzelle bereitstellt.

Die erfindungsgemäße Lösung stellt mittels der Dämpfungseinrichtung einen Schutzmechanismus für den Drucksensor bereit. Dieser Schutzmechanismus ist in Form eines seriellen Dämpfers ausgebildet, der der Messmembran der Messzelle des Drucksensors vorgeschaltet ist. Die Dämpfungseinrichtung bzw. der serielle Dämpfer besteht aus einer Verengungsstruktur, die auch als Restriktor bezeichnet werden kann, und einem nach der Verengungsstruktur angebrachten Volumenerweiterungsmittel, das eine Ausdehnungsmöglichkeit für das Messfluid bereitstellt.

Die Funktionsweise einer solchen Dämpfungseinrichtung ist wie folgt. Periodische Druckschwankungen müssen, bevor sie die Messmembran der Schutzzelle erreichen können, die Verengungsstruktur passieren. Dies geschieht dadurch, dass das Volumenerweiterungsmittel nach der Verengungsstruktur über den erhöhten Druck, der durch die periodische Druckschwankung bereitgestellt wird, ein erhöhtes Volumen aufnimmt. Die Bereitstellung des Volumenerweiterungsmittels erlaubt somit einen Fluss des Messfluids durch die Verengungsstruktur, wodurch sich über der Verengungsstruktur ein Druckabfall ergibt. Dieser Druckabfall verhindert, dass starke periodische Druckschwankungen an der Messzelle ankommen.

Erfindungsgemäß ist darüberhinaus die Dämpfungseinrichtung in einer Schutzzelle angeordnet, die mit einem Messfluid gefüllt ist. Die Dämpfungseinrichtung ist somit nicht unmittelbar in den Zuleitungen zu der Messzelle angebracht. Dies ist mit dem Vorteil verbunden, dass potentiell verunreinigte Flüssigkeiten wie Brennstoff oder Öl enge Durchgänge der Verengungsstruktur nicht verstopfen können. Vielmehr befindet sich die Dämpfungseinrichtung zwischen einer Trennmembran und der Messzelle des Drucksensors, wobei der als Schutzzelle bezeichnete Zwischenraum zwischen der Trennmembran und der Messzelle mit einer "reinen" Flüssigkeit gefüllt ist.

Durch die Anordnung einer Dämpfungseinrichtung mit einer Verengungsstruktur und einem Volumenerweiterungsmittel in einer Schutzzelle werden somit Druckstöße vor der empfindlichen Membran der Messzelle gedämpft. Dadurch ist der Drucksensor auch für Anwendungen mit hohen periodischen Druckstößen geeignet. Durch Anordnung der Dämpfungseinrichtung in einer definiert sauberen Flüssigkeit, dem Messfluid, werden darüber hinaus Blockaden bzw. Verstopfungen in der Verengungsstruktur sicher verhindert.

Die Verengungsstruktur kann durch jede Struktur bereitgestellt werden, die eine Verengung des Leitungsquerschnitts in der Schutzzelle und/oder eine Umlenkung des Messfluids und dadurch einen Strömungswiderstand bewirkt. Sie wird beispielsweise durch eine offenporige poröse Struktur, beispielsweise eine offenporige Mikrostruktur gebildet, bei der es sich beispielsweise um einen Metallschaum handelt. Die Verengungsstruktur kann dabei eine Mehrzahl von Engstellen für das Messfluid aufweisen, die parallel und/oder seriell angeordnet sind, wie es beispielsweise bei einer porösen Struktur der Fall ist. Die Verengungsstruktur kann jedoch auch in anderer Weise, beispielsweise als Drossel ausgebildet sein.

Das Volumenerweiterungsmittel kann in einer möglichen Ausgestaltung der Erfindung durch ein elastisch kompressibles und/oder elastisches Element gebildet sein, das zwischen der Verengungsstruktur und der Messzelle angeordnet ist. Bei Auftreten eines Druckes erfährt das Volumenerweiterungsmittel eine Kompression und/oder eine elastische Auslenkung, so dass sich das Volumen im Bereich zwischen der Verengungsstruktur und der Messzelle vergrößert.

Das Volumenerweiterungsmittel ist beispielsweise als kompressibles Kunststoffelement ausgebildet oder wird z.B. durch kompressible Kunststoffkugeln gebildet. Auch kann vorgesehen sein, dass das Volumenerweiterungsmittel mindestens einen elastischen Wandabschnitt der Schutzzelle umfasst, der im Bereich zwischen der Verengungsstruktur und der Messzelle ausgebildet ist. Eine Druckerhöhung führt in diesem Fall zu einer Auslenkung des Wandabschnitts und dadurch zu einer Volumenerhöhung. Ein solch elastischer Wandabschnitt kann beispielsweise durch eine Kunststoffwand oder eine elastisch gelagerte Metallwand bereitgestellt werden. Es sind jedoch auch andere Ausdehnungsvarianten möglich.

Das in der Schutzzelle befindliche Messfluid ist beispielsweise ein Silikonöl, ein Mineralöl oder Wasser, wobei das Messfluid eine "reine" Flüssigkeit der Messzelle bildet, die frei von Verunreinigungen ist.

Die Schutzzelle umfasst in einer Ausgestaltung zwischen der Trennmembran und der Verengungsstruktur ein Koppelvolumen. Druckänderungen im zu messenden Fluid, das an der der Schutzzelle abgewandten Seite der Trennmembran anliegt, wird über die Trennmembran auf das Messfluid in der Schutzzelle übertragen, wobei die Druckänderung zunächst im Koppelvolumen aufgenommen wird und sich dann in Richtung der Dämpfungseinrichtung fortsetzt.

Gemäß einer Ausgestaltung der Erfindung ist die Dämpfungseinrichtung der erfindungsgemäßen Vorrichtung dazu eingerichtet und ausgebildet, periodische Druckschwankungen, insbesondere höherfrequente Druckschwankungen zu dämpfen. Als höherfrequente Druckschwankungen werden dabei Druckschwankungen mit einer Frequenz bezeichnet, die um mindestens eine Dekade höher liegt als die Frequenzen im zu erfassenden Messbereich. Die erfindungsgemäße Lösung filtert schnelle Druckänderungen, wie sie durch periodische Druckschwankungen bereitgestellt werden, heraus, so dass die Messzelle vor solchen Druckänderungen geschützt ist. Langsame Druckänderungen, die beispielsweise im Bereich von einigen Hz oder darunter liegen, oder quasistatische Druckänderungen werden dagegen nicht herausgefiltert und von der Messzelle erfasst.

In einer Ausgestaltung der Erfindung ist der Drucksensor zur Messung eines Absolutdruckes ausgebildet. Dabei grenzt die Messzelle des Drucksensors zum einen an die Schutzzelle und zum anderen an einen Referenzdruck an, der beispielsweise durch ein Vergleichsvolumen, das beispielsweise als Vakuumzelle ausgebildet ist, bereitgestellt wird.

In einer anderen Ausgestaltung ist der Drucksensor als Differenzialdrucksensor ausgebildet, wobei die Schutzzelle symmetrisch aufgebaut ist und zwei Trennmembrane und zwei Dämpfungseinrichtungen aufweist. Dabei ist die Messzelle des Drucksensors zwischen den zwei Dämpfungseinrichtungen angeordnet. Bei Verwendung eines Differenzialdrucksensors kommt der beschriebene Schutzmechanismus somit zweifach zum Einsatz.

Die Erfindung betrifft auch eine Filteranordnung zur Filterung eines Fluides mit einer Vorrichtung gemäß Anspruch 12, wobei die Vorrichtung in eine zwischen einem Einlass in die Filteranordnung und einem Auslass aus der Filteranordnung geschaltete Messleitung mit zwei Messleitungsarmen eingeschaltet ist, die jeweils über eine Trennmembran mit der Schutzzelle der Vorrichtung verbunden sind. Eine solche Filteranordnung unter Verwendung eines Differenzialdrucksensors wird beispielsweise in Brennstoff- bzw. Ölleitungen oder in Leitungen mit Schmierflüssigkeit eingesetzt, um eine Blockade der Filteranordnung durch Verschmutzungen detektieren zu können. Dies erfolgt durch die Messung des statischen Drucks bzw. eines Druckabfalls über den Filter. Die erfindungsgemäße Vorrichtung ist zur Filterung von periodischen Druckschwankungen in beliebigen Flüssigkeiten, Gasen sowie deren Gemischen einsetzbar. Eine Verwendung in Verbindung mit einer Filteranordnung zur Filterung von Schmierflüssigkeit, Öl oder Brennstoff steht lediglich eine Ausgestaltung der Erfindung dar.

Ein weiterer Vorteil der erfindungsgemäßen Lösung besteht darin, dass für den Drucksensor auf der Grundlage von Halbleiterbasismaterial in Mikrostrukturtechnik hergestellte Messzellen, beispielsweise Silizium-Messzellen eingesetzt werden können. Die Entwicklung und Herstellung solcher Mikrostrukturelemente auf Halbleiterbasismaterial ist aufwändig. Es ist daher vorteilhaft, solche Strukturelemente in abgewandelter Form mehrfach, für unterschiedliche Aufgabe zu verwenden. Eine solche Aufgabe kann im Einsatz in der erfindungsgemäßen Messvorrichtung liegen, wobei über die Schutzzelle und die Dämpfungseinrichtung ein Schutz der in Mikrostrukturtechnik hergestellten Messzelle bereitgestellt wird.

Die erfindungsgemäße Lösung ermöglicht es, die Lebensdauer der zumeist in Mikrostrukturtechnik ausgebildeten Messzelle des Drucksensors derart zu erhöhen, dass ein sicherer Einsatz auch bei Auftreten von hohen periodischen Druckwellen ermöglicht wird. Damit sind aufwändig und kostenintensiv entwickelte Mikrostrukturelemente ohne Änderungen auch für Anwendungen in Drucksensoren geeignet, bei denen eine härtere Umgebung mit periodisch verlaufenden Druckpulsen vorliegt.

Die Erfindung wird nachfolgend unter Bezugnahme auf die Figuren der Zeichnung anhand mehrerer Ausführungsbeispiele näher erläutert. Es zeigen:
- Figur 1: ein erstes Ausführungsbeispiel einer Messvorrichtung mit einem Drucksensor und einer Dämpfungseinrichtung, wobei die Messvorrichtung zur Messung eines Absolutdrucks ausgebildet ist;
- Figur 2: ein zweites Ausführungsbeispiel einer Messvorrichtung mit einem Drucksensor, wobei der Drucksensor als Differenzialdrucksensor ausgebildet und die Messvorrichtung symmetrisch mit zwei Dämpfungseinrichtung ausgebildet ist; und
- Figur 3: schematisch in Schnittdarstellung eine Filteranordnung zur Filterung eines Fluids mit einer Messeinrichtung gemäß Figur 2.

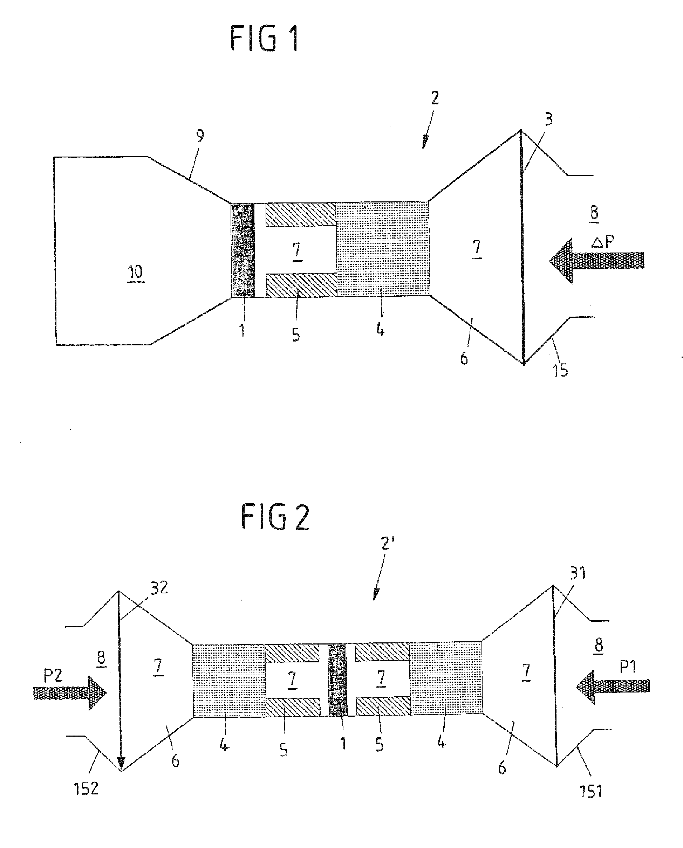

Die Figur 1 zeigt ein erstes Ausführungsbeispiel einer Messeinrichtung, die eine Messzelle 1 eines Drucksensors umfasst und dazu dient, Druckänderungen eines Fluids zu erfassen. Die Messzelle ist beispielsweise als Silizium-Messzelle in Mikrostrukturtechnik ausgebildet. Sie umfasst in diesem Fall typischerweise einen strukturierten Siliziumkörper und eine Messmembran. Die Membran kann dabei aus dem Siliziumchip ausgeätzt sein. Derartige Messzellen sind an sich bekannt, so dass hierauf nicht weiter eingegangen wird. Es wird aber darauf hingewiesen, dass anstelle von Messzellen aus Silizium auch beliebige andere Messzellen eingesetzt werden können, die zur Messung eines Druckes geeignet sind. Der Drucksensor kann zusätzlich zu der Messzelle 1 weitere, nicht dargestellte Elemente wie z.B. elektrische und elektronische Bauteile sowie Anschlusskontakte aufweisen.

Die Messzelle 1 ist am Rand einer Schutzzelle 2 angeordnet, die an die Messzelle 1 angrenzt und die eine Trennmembran 3, eine Verengungsstruktur 4, ein Volumenerweiterungsmittel 5 und ein Koppelvolumen 6 aufweist. Die Schutzzelle 2 ist mit einem Messfluid 7 gefüllt, bei dem es sich beispielsweise um ein Silikonöl handelt. Die Schutzzelle 2 erstreckt sich zwischen der Trennmembran 3 und der Messzelle 1.

Auf der anderen Seite der Trennmembran 3 befindet sich ein zu messendes Fluid 8, in dem ein Druck p herrscht. Das zu messende Fluid 8 befindet sich beispielsweise in einer schlauchförmigen Zuleitung oder Messleitung 15. Eine Druckänderung 4p im zu messenden Fluid 8 wird über die Trennmembran 3 auf das Messfluid 7 der Messzelle 2 übertragen. Eine solche Druckänderung kann grundsätzlich niederfrequent oder im Wesentlichen statisch erfolgen, für welchen Fall sie durch die Messzelle 1 erfasst und gemessen wird. Eine solche Druckänderung kann jedoch auch hochfrequent erfolgen, unter Auftreten periodischer Druckschwankungen mit ggf. hoher Amplitude. Vor letzteren Druckschwankungen ist die Messzelle 1 zum Erhalt einer langen Lebensdauer zu schützen.

Hierzu werden periodische Druckstöße durch die Kombination der Verengungsstruktur 4 mit dem Volumenerweiterungsmittel 5 gedämpft, wie im Folgenden erläutert wird. Die Verengungsstruktur 4 und das Volumenerweiterungsmittel stellen dabei eine Dämpfungseinrichtung bereit, die die Messzelle 1 vor periodischen Druckschwankungen schützt.

Die Verengungsstruktur 4 ist im dargestellten Ausführungsbeispiel durch eine offenporige Mikrostruktur gebildet, beispielsweise durch einen Metallschaum. Dieser umfasst eine Vielzahl von engen Durchgängen bzw. Engstellen. Eine Vielzahl solcher Engstellen kann parallel und/oder sequentiell in der Verengungsstruktur 4 ausgebildet sein.

Zwischen der Verengungsstruktur 4 und der Messzelle 1 befindet sich das Volumenerweiterungsmittel 5. Dieses ist beispielsweise durch ein Kunststoffelement, beispielsweise einen Kunststoffschaum gebildet, das kompressibel und dabei elastisch ausgebildet ist. Bei einer Druckerhöhung wird das Volumenerweiterungsmittel 5 elastisch zusammengedrückt, was zu einer Volumenvergrößerung im Bereich zwischen der Verengungsstruktur 4 und der Messzelle 1 führt. Nach Wegfall der Druckerhöhung dehnt sich das Volumenerweiterungsmittel 5 wieder aus.

Gemäß einer anderen Ausführungsvariante ist das Volumenerweiterungsmittel 5 durch einen elastischen Wandabschnitt der Messzelle 2 gebildet. Bei einer Druckerhöhung dehnt sich der elastische Wandabschnitt, was zu einer Vergrößerung des Durchmessers der Messzelle 2 in diesem Bereich und somit ebenfalls zu einer Volumenerhöhung führt. Das Volumenerweiterungsmittel 5 kann jedoch auch in anderer Weise realisiert sein, beispielsweise durch flexible Metallstrukturen oder durch innerhalb des Messfluids angeordnete kompressible Strukturen.

Die Auslegung des Volumenerweiterungsmittels 5 erfolgt in einer Ausgestaltung derart, dass seine Kompressibilität bzw. Elastizität höher ist als die der Messmembran der Messzelle 1, letztere also eine höhere Streifigkeit besitzt. Dadurch wird sichergestellt, dass die Messmembran zu der Volumenvergrößerung im Wesentlichen keinen Beitrag leistet.

Eine Dämpfung bei Auftreten periodischer Druckstöße in dem zu messenden Fluid 8 erfolgt wie folgt. Druckänderungen Δp im zu messenden Fluid 8 werden über die Trennmembran 3 auf das Messfluid 7 übertragen. Dieses nimmt die Druckänderung Δp in dem Koppelvolumen 6 auf. Das Koppelvolumen 6 ist dabei im dargestellten Ausführungsbeispiel trichterförmig ausgebildet, wobei sich seine Wände in Richtung der Verengungsstruktur 4 verjüngen. Diese Ausgestaltung des Koppelvolumens 6 ist jedoch nur beispielhaft zu verstehen und nicht notwendig für die Funktion der Messvorrichtung. Es ist in einer Ausführungsvariante vorgesehen, dass die Trennmembran 3 so bemessen ist, dass die notwendige Volumenverschiebung ohne nennenswerte Materialermüdung gewährleistet werden kann. Hierzu kann der Durchmesser der Trennmembran 3 relativ groß gewählt sein.

Das Messfluid 7, das die periodischen Druckstöße aufnimmt, erfährt an der Verengungsstruktur 4 einen Druckabfall. Hierbei ist zu beachten, dass ein gewisser Fluss des Messfluids 7 durch die Verengungsstruktur 4 stattfindet, wobei die mit einem solchen Fluss verbundene Volumenvergrößerung im Bereich zwischen der Verengungsstruktur 4 und der Messzelle 1 durch das Volumenerweiterungsmittel 5 aufgenommen wird. Durch die Passage von Messfluid 7 durch die Verengungsstruktur 4 ergibt sich ein Druckabfall über der Verengungsstruktur 4. Dieser Druckabfall verhindert, dass starke periodische Druckschwankungen an der Messzelle 1 ankommen. Niederfrequente oder quasi statische Druckänderungen können die Dämpfungseinrichtung 4, 5 dagegen passieren und werden durch die Messzelle 1 erfasst.

Auf der der Schutzzelle 2 abgewandten Seite der Messzelle 1 befindet sich eine Referenzzelle 9, in der beispielsweise ein Vakuum 10 ausgebildet ist. Die Referenzzelle 9 ist mit der Rückseite der Messmembran der Messzelle 1 gekoppelt, so dass Druckschwankungen im zu messenden Fluid 8 durch die Messvorrichtung in absoluten Werten erfasst und gemessen werden können.

Die Figur 2 stellt ein Ausführungsbeispiel dar, bei dem der Drucksensor als Differentialdrucksensor ausgebildet ist. Die Messzelle 2' ist bei dieser Ausgestaltung symmetrisch ausgebildet und umfasst zwei Trennmembrane 31, 32, zwei Koppelvolumen 6, zwei Verengungsstrukturen 4 und zwei Volumenerweiterungsmittel 5, die jeweils symmetrisch in Bezug auf die mittig angeordnete Messzelle 1 angeordnet sind.

Das zu messende Fluid 8 ist in zwei Zuleitungen 151, 152 geführt und jeweils über eine der Trennmembrane 31, 32 mit der Schutzzelle und dem dort vorhandenen Messfluid 7 gekoppelt. Entsprechend der Ausbildung des Drucksensors als Differentialdrucksensor werden niederfrequente oder quasi statische Druckdifferenzen zwischen den Drücken P1, P2 in den beiden Zuleitungen 151, 152 erfasst.

Im Falle von periodischen Druckschwankungen erfolgt jeweils eine Filterung dieser Druckschwankungen auf beiden Seiten der Messzelle 1, wie in Bezug auf die Figur 1 beschrieben.

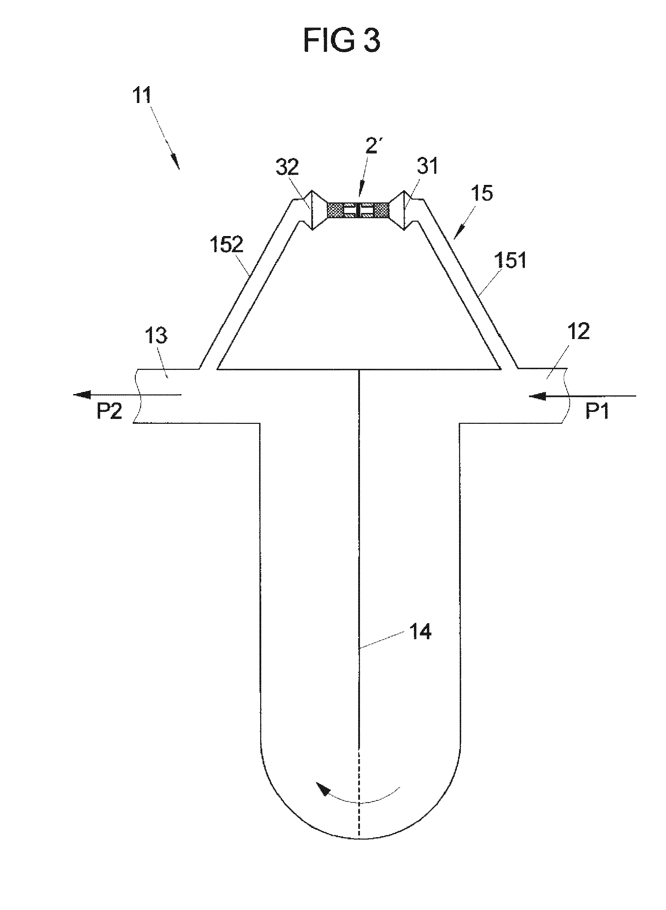

Eine beispielhafte Anwendung der Messvorrichtung der Figur 2 ist in der Figur 3 beschrieben, die eine Filteranordnung 11 zur Filterung von Öl oder Brennstoff darstellt, wie sie beispielsweise in Flugtriebwerken zum Einsatz kommt. Die Filteranordnung 11 umfasst einen Einlass 12 für ungefiltertes Öl oder ungefilterten Kraftstoff und einen Auslass 3 für das gefilterte Öl oder den gefilterten Kraftstoff. In der Filteranordnung 11 ist dabei in an sich bekannter Weise ein Filterelement 14 vorhanden. Die Filteranordnung 11 dient der Filterung von Fremdstoffen bzw. Verschmutzungen im Öl oder Brennstoff.

Das Öl oder der Brennstoff fließt der Filteranordnung 11 unter dem Druck P1 durch den Einlass 12 zu und verlässt die Filteranordnung 11 durch den Auslass 13 unter dem Druck P2. Die Differenzdruck ΔP = P1 - P2, die sich durch den Durchfluss des Öls oder Kraftstoffes durch die Filteranordnung 11 einstellt, muss ständig gemessen und kontrolliert werden, um Verstopfungen der Filteranordnung 11 rechtzeitig zu erkennen. Gleichzeitig soll ein Drucksensor, der eine solche Messung und Kontrolle durchführt, vor periodischen Druckwellen geschützt werden.

Hierzu ist zwischen dem Einlass 12 und dem Auslass 13 der Filteranordnung 11 eine aus einem ersten und einem zweiten Messleitungsarm 151, 152 gebildete Messleitung 15 geschaltet. Zwischen die beiden Messleitungsarme 151, 152 ist die Messanordnung gemäß der Figur 2 geschaltet. Dementsprechend ist der eine Messleitungsarm 151 mit der einen Trennmembran 31 und der andere Messleitungsarm 152 mit der anderen Trennmembran 52 verbunden. Zwischen den Trennmembranen 31, 32 befindet sich die Schutzzelle 2' mit den zwei Dämpfungseinrichtungen 4, 5 und der Messzelle 1.

Durch die beschriebene Messanordnung kann eine Änderung der Druckdifferenz ΔP = P1 - P2 erfasst werden, so dass eine Verstopfung rechtzeitig erkannt wird. Gleichzeitig wird die Messzelle des Drucksensors durch die Dämpfungseinrichtungen 4, 5 vor periodischen Druckschwankungen geschützt, die sich beispielsweise durch die Getriebevibrationen und Resonanzen ergeben. Der Drucksensor wird somit vor auftretenden Druck- und Stoßwellen geschützt, so dass er seine Messtätigkeit im Hinblick auf eine Messung der Druckdifferenz ΔP mit einer verlängerten Lebensdauer durchführen kann.

Die Erfindung beschränkt sich in ihrer Ausgestaltung nicht auf die vorstehend dargestellten Ausführungsbeispiele, die lediglich beispielhaft zu verstehen sind. Beispielsweise können die Schutzzelle, die Verengungsstruktur und die Volumenerweiterungsstruktur in anderer Weise als dargestellt ausgebildet sein. Auch kann vorgesehen sein, dass die Verengungsstruktur und Volumenerweiterungsstruktur nicht unmittelbar aufeinander folgen, sondern in Abstand zueinander zwischen Trennmembran und Messzelle ausgebildet sind.

## Patentansprüche

1. Messvorrichtung mit einem Drucksensor, wobei der Drucksensor eine Messzelle (1) aufweist, die dazu ausgebildet ist, einen Druck zu erfassen,
**dadurch gekennzeichnet,**
- **dass** die Messzelle (1) des Drucksensors in einer oder angrenzend an eine Schutzzelle (2, 2') angeordnet ist, die mit einem Messfluid (7) gefüllt ist, das über mindestens eine Trennmembran (3, 31, 32) mit einem zu messenden Fluid (8) koppelbar ist, und
- **dass** in der Schutzzelle (2, 2') zwischen der Trennmembran (3, 31, 32) und der Messzelle (1) eine Dämpfungseinrichtung angeordnet ist, die eine Verengungsstruktur (4) und ein dahinter angeordnetes Volumenerweiterungsmittel (5) umfasst, das bei einer Druckerhöhung im Messfluid (7) ein vergrößertes Volumen zwischen der Verengungsstruktur (1) und der Messzelle (1) bereitstellt.

2. Vorrichtung nach Anspruch 1, **dadurch gekennzeichnet, dass** die Verengungsstruktur (4) durch eine offenporige poröse Struktur gebildet ist.

3. Vorrichtung nach Anspruch 1 oder 2, **dadurch gekennzeichnet, dass** die Verengungsstruktur (4) durch einen Metallschaum gebildet ist.

4. Vorrichtung nach einem der vorangehenden Ansprüche, **dadurch gekennzeichnet, dass** die Verengungsstruktur (4) eine Mehrzahl von Engstellen für das Messfluid aufweist, die parallel und/oder seriell angeordnet sind.

5. Vorrichtung nach einem der vorangehenden Ansprüche, **dadurch gekennzeichnet, dass** das Volumenerweiterungsmittel (5) mindestens ein elastisch kompressibles und/oder elastisches Element aufweist, das zwischen der Verengungsstruktur (4) und der Messzelle (1) angeordnet ist.

6. Vorrichtung nach einem der vorangehenden Ansprüche, **dadurch gekennzeichnet, dass** das Volumenerweiterungsmittel (5) mindestens einen elastischen Wandabschnitt der Schutzzelle (2, 2') umfasst, der im Bereich zwischen der Verengungsstruktur (4) und der Messzelle (1) ausgebildet ist.

7. Vorrichtung nach einem der vorangehenden Ansprüche, **dadurch gekennzeichnet, dass** das Messfluid (7) ein Silikonöl, ein Mineralöl oder Wasser ist.

8. Vorrichtung nach einem der vorangehenden Ansprüche, **dadurch gekennzeichnet, dass** das Messfluid (7) getrennt ist vom zu messenden Fluid (8), so dass es nicht verschmutzen kann.

9. Vorrichtung nach einem der vorangehenden Ansprüche, **dadurch gekennzeichnet, dass** die Schutzzelle (2, 2') zwischen der Trennmembran (3, 31, 32) und der Verengungsstruktur (4) ein Koppelvolumen (6) ausbildet.

10. Vorrichtung nach einem der vorangehenden Ansprüche, **dadurch gekennzeichnet, dass** die Dämpfungseinrichtung dazu eingerichtet und ausgebildet ist, periodische Druckschwankungen, insbesondere solche in höheren Frequenzbereichen zu dämpfen.

11. Vorrichtung nach einem der vorangehenden Ansprüche, **dadurch gekennzeichnet, dass** der Drucksensor zur Messung eines Absolutdrucks ausgebildet ist, wobei die Messzelle (1) des Drucksensors zum einen an die Schutzzelle (2) und zum anderen an einen Referenzdruck angrenzt.

12. Vorrichtung nach einem der Ansprüche 1 bis 10, **dadurch gekennzeichnet, dass** der Drucksensor als Differentialdrucksensor ausgebildet ist, wobei die Schutzzelle (2') symmetrisch aufgebaut ist und zwei Trennmembrane (31, 32) und zwei Dämpfungseinrichtungen aufweist, wobei die Messzelle (1) des Drucksensors zwischen den zwei Dämpfungseinrichtungen angeordnet ist.

13. Filteranordnung zur Filterung eines Fluides, **gekennzeichnet durch** eine Vorrichtung gemäß Anspruch 12, wobei die Vorrichtung in eine zwischen einem Einlass (12) in die Filteranordnung und einem Auslass (13) aus der Filteranordnung geschaltete Messleitung (15) mit zwei Messleitungsarmen (151, 152) eingeschaltet ist, die jeweils über eine Trennmembran (31, 32) mit der Schutzzelle (2') der Vorrichtung verbunden sind.

14. Filteranordnung nach Anspruch 13, **dadurch gekennzeichnet, dass** die Filteranordnung zur Filterung von Schmierflüssigkeit, Öl oder Brennstoff ausgebildet ist.
